# EUROPEAN PATENT APPLICATION

(11) **EP 1 102 191 A2**
(43) Date of publication of application: **23.05.2001**
(21) Application number: 00660206.4
(22) Date of filing: 16.11.2000
(51) Int. Cl.: G06F 17/60

(54) **Method and apparatus for reconciling data between devices**

(30) Priority: 17.11.1999 US 441793
(71) Applicant: Nokia Corporation, 02150 Espoo (FI)
(72) Inventor: Beresin, Evgenij, 00570 Helsinki (FI)
(74) Representative: Johansson, Folke Anders

(57) **Abstract**

The present invention provides a method, server, system and computer program product for reconciling databases using a central server. The central server receives new information originally input into a database at a remote computing device and updates the database stored at the central server. The central server then determines whether other remote computing devices require the new information and transfers the new information to those remote computing device.

## Description

### FIELD OF THE INVENTION

This invention relates to reconciling data between devices and more particularly to using wireless data transfers between devices to reconcile databases maintained on more than one device.

### BACKGROUND OF THE INVENTION

Many computer based systems include databases of information relating to, for example, mailing lists, calendars, etc. Often times users of these databases maintain them on two or more computers. Currently, most of these databases require a user to manually input initial data in all the maintained databases and to manual input new in formation to each database for any given addition or change. Requiring manual input from the user makes these systems difficult to use and prone to errors.

Automatic reconciliation systems help minimize the manual input errors. These systems, typically, operate by establishing a direct communication link between each communication device, and running a reconciliation procedure under user control. For example, U.S. Patent 5,701,423, issued to Crozier on December 23, 1997, entitled METHOD FOR MAPPING, TRANSLATING, AND DYNAMICALLY RECONCILING DATA PLATFORMS, the disclosure of which is expressly incorporated herein by reference, discloses using an application program and connection between a handheld computer and a desktop computer to reconcile databases between the two disparate computing systems. Similarly, U.S. Patent 5,832,489, issued to Kucala on November 3, 1998, entitled METHOD AND APPARATUS FOR SYNCHRONIZING INFORMATION ON TWO DIFFERENT COMPUTER SYSTEMS, the disclosure of which is expressly incorporated herein by reference, discloses establishing a communication link between a palmtop computer and a desk top computer having databases with similar formats. Finally, U.S. Patent 5,790,974, issued to Tognazzini on August 4, 1998, entitled PORTABLE CALENDARING DEVICE HAVING PERCEPTUAL AGENT MANAGING CALENDAR ENTRIES, the disclosure of which is expressly incorporated herein by reference, discloses using a wireless communication link to synchronize data between a portable calendar system and an office calendar system. Therefore, a system for reconciling databases on two or more disparate computing systems that does not require either a direct communication link or user involvement is desirable.

### SUMMARY OF THE INVENTION

To attain the advantages and in accordance with the purpose of the invention, as embodied and broadly described herein, a method for reconciling databases using a central server is provided. The central server receives new information input into a database and updates the database stored at the central server. The central server determines whether at least one remote computing device requires the new information and transfers the new information to the remote computing device.

The present invention also provides for a central server capable of reconciling databases between at least two remote computing devices. The central server has a memory for storing the database, a device identifier list, and an update list. A receiver of the central server is adapted to receive a communication file containing new information from one of the remote computing devices. The central server has a central processing unit that converts the communication file into a format compatible with the with central database and updates the central database. The central server also has a transmitter adapted to establish a communication link with the at least two remote computing devices.

The present invention also provides for a computer program product for reconciling databases. The computer program product includes a computer usable medium having computer readable code embodied therein for reconciling the databases. The computer usable medium having a receiving module configured to receive new information at the a central server. An updating module is configured to update a database stored at the central server. A determining module determines whether at least one remote computing device requires the received new information and a transmitting module is configured to transmit the new information to that computing device.

The foregoing and other features, utilities and advantages of the invention will be apparent from the following more particular description of a preferred embodiment of the invention as illustrated in the accompanying drawings.

### BRIEF DESCRIPTION OF THE DRAWING

The objects, features, and advantages of the present invention will be apparent from the following detailed description of the preferred embodiment of the invention with reference to the following drawings:
Fig. 1 is a functional block diagram of a plurality of devices in accordance with the present invention;
Fig. 2 is a functional block diagram of central server 102 of Fig. 1;
Fig. 3 is a block diagram of a file structure in memory 220 of Fig. 2 in accordance with the present invention;
Fig. 4, is a functional block diagram of remote computing device 106 of Fig. 1;
Fig. 5, is a block diagram of a file structure in memory 420 of Fig. 4 in accordance with the present invention;
Fig. 6 is a flow chart describing inputting information to a database at a remote computing device in accordance with the present invention;
Fig. 7 is a flow chart describing inputting information received from a remote computing device to a database at a central server;
Fig. 8 is a flow chart describing transmitting information from a central server to a remote computing device; and
Fig. 9 is a flow chart describing the operation of a remote computing device after it has received information from a central server.

### DETAILED DESCRIPTION OF THE PREFERRED EMBODIMENT

While the invention has been particularly shown and described with reference to a preferred embodiment thereof, it will be understood by those skilled in the art that various other changes in the form and details may be made without departing from the spirit and scope of the invention.

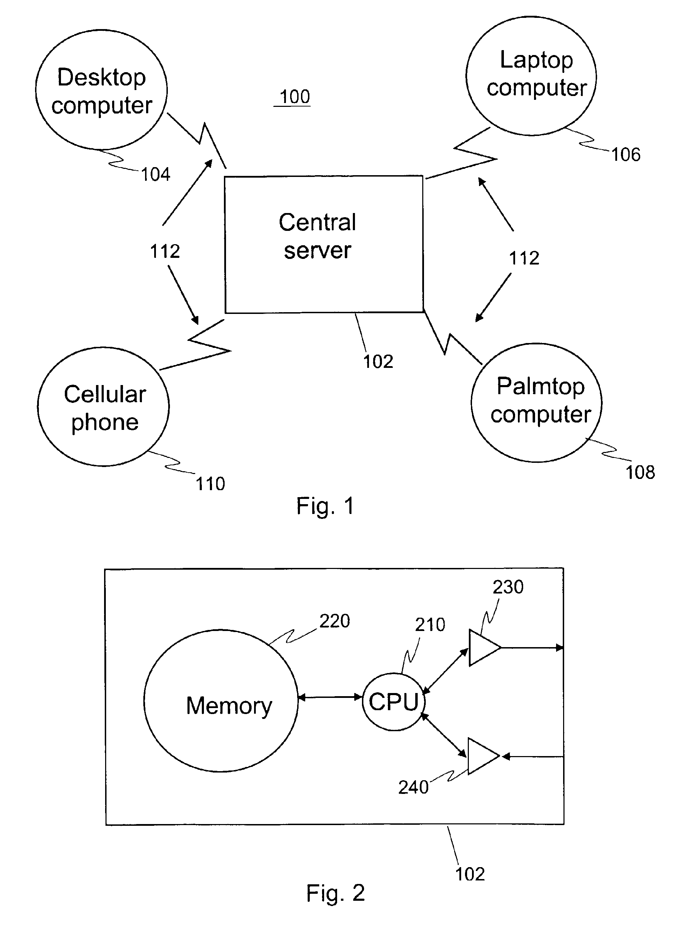

The present invention discloses methods and apparatus for automatically reconciling databases between various computing devices. Fig. 1 shows a communication system 100 having a central server 102 and a plurality of remote computing devices 104, 106, 108, and 110. For example, computing device 104 could be a desktop computer, computing device 106 could be a laptop computer, computing device 108 could be a palmtop computer, and computing device 110 could be a cellular phone. Communication links 112 connect central server 102 with remote computing devices104, 106, 108, and 110. Thus, system 100 comprises a hub and spoke arrangement.

In one preferred embodiment of the present invention, communication links 112 are wireless communication links and central server 102 comprises an Internet server accessible through a wireless gateway. In this embodiment, communication between remote computing devices 104, 106, 108, and 110 and central server 102 follow the Wireless Application Protocol ("WAP") although any protocol is possible.

Fig. 2 shows server 102 in more detail. Central server 102 includes a central processing unit (CPU) 210, a memory 220, a wireless transmitter 230, and a wireless receiver 240. CPU 210 has resonant programs running for carrying out the operations described, herein. CPU 210, storage unit 220, wireless transmitter 230 and wireless receiver 240 are connected by bus (not specifically shown) using standard bus protocols, which are know in the art. Although represented as individual sections, many of the components in central server 102 could be combined. For example, wireless transmitter 230 and wireless receiver 240 could be combined into one transceiver.

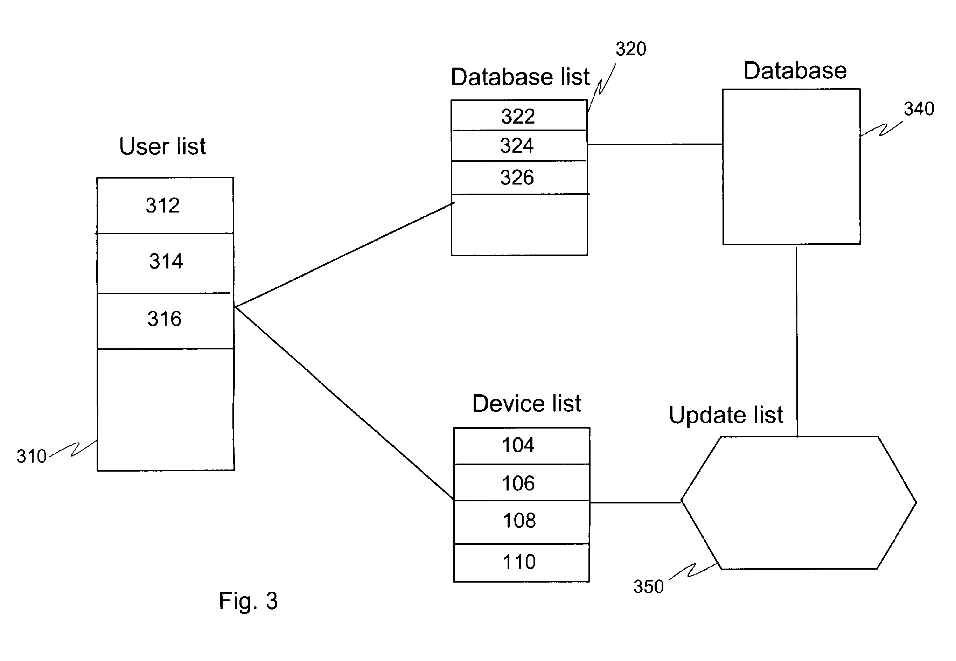

Fig. 3 shows one possible file structure 300 for memory 220. File structure 300 includes a user directory list 310 having a list of users directories 312, 314, 316, etc. User directory 314, for example, contains a database directory list 320 of databases user 314 maintains reconciled over several computing devices and a device list 330 of devices user 314 owns and contain databases to be reconciled. Directory list 320 identifies databases 322, 324, 326, etc. of user 314 that user 314 wants central server 102 to reconcile with devices in device list 330. In this example, device list 330 identifies remote computing devices 104, 106, 108, and 110 (Fig. 1), but any number or types of devices could be identified. For each device 104, 106, 108 etc., device list 330 contains flags indicative of whether the device is powered at the moment. Database directory 324 contains a database 340 having information and records. Additionally, memory 320 has an update list 350 for the database 340. Device list 330 maintains a link to update list 350 containing flags indicative of whether the device database has been updated since the last time data was received by the database 340.

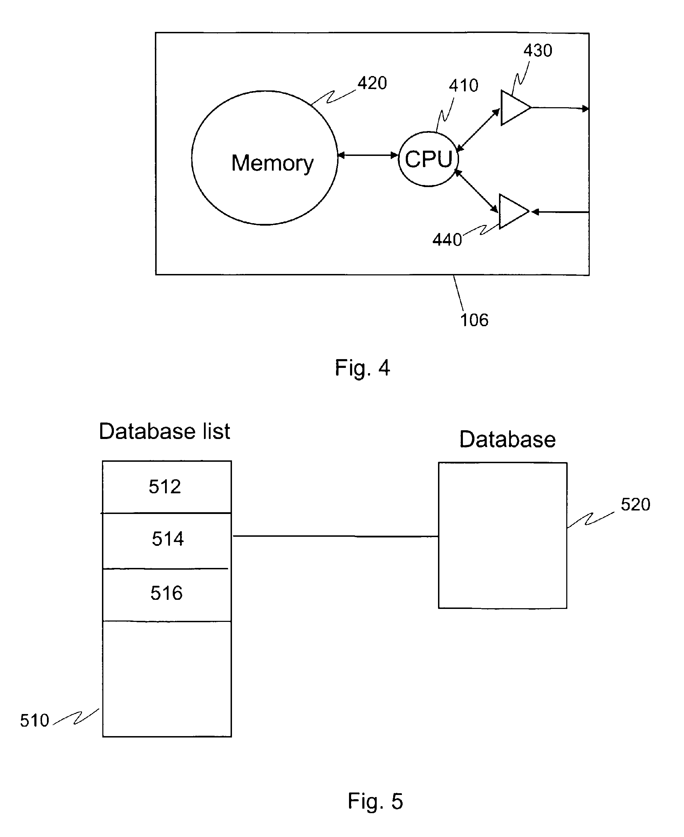

Fig. 4 shows remote computing device 106 in more detail. Remote computing device 106 includes a central processing unit (CPU) 410, a memory 420, a wireless transmitter 430, and a wireless receiver 440. CPU 410 has resonant programs running for carrying out the operations described, herein. CPU 410, storage unit 420, wireless transmitter 430 and wireless receiver 440 are connected by bus (not specifically shown) using standard bus protocols, which are know in the art. Although represented as individual sections, many of the components in central server 102 could be combined. For example, wireless transmitter 430 and wireless receiver 440 could be combined into one transceiver. As shown in Fig. 5, memory 420 contains a database directory list 510 having a list of databases 512, 514, 516, etc. Each database, for example database 512, contains a database 520 containing the records that the user has central processor 102 maintain reconciled between multiple computing devices, *i.e.,* the shared databases. Notice that device 106 can maintain databases separately from the shared databases.

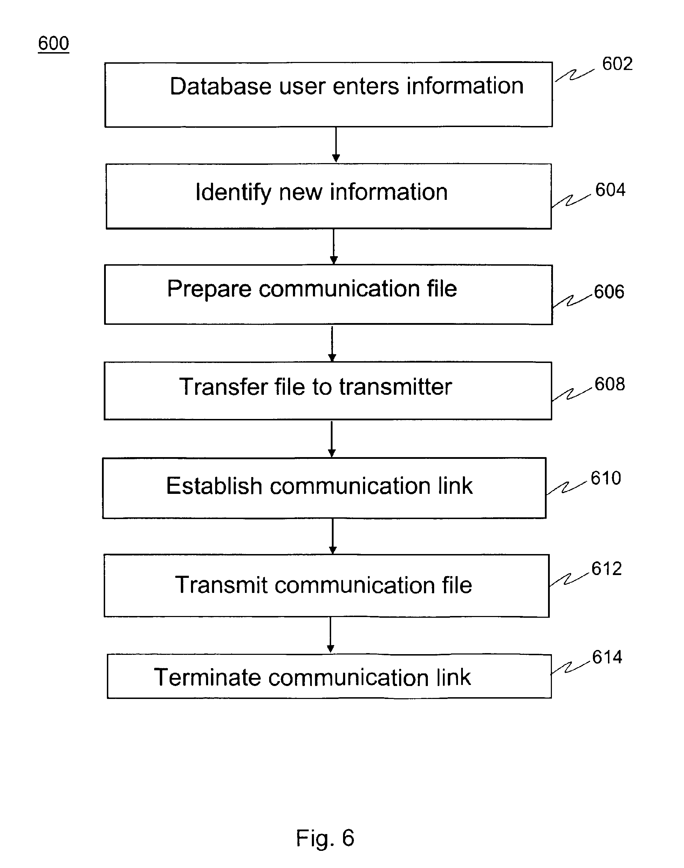

Fig. 6 shows a flow chart 600 describing operation of remote device 106 when the user inputs new information into one of the shared databases, for example database 520. First, a user of database 520 enters new information, step 602. CPU 410 of remote computing device 106 identifies the new information, step 604, and prepares a communication file capable for transmission to central server 102, step 606. The communication file includes a user device identifier, which is unique for each device, a database identifier for database 520, and the new information. The device identifier includes a portion that is unique for each user of central server 102 but common to that users' devices as well as a portion that is unique for each different remote computing device of that user. CPU 410 then transfers the communication file to wireless transmitter 430, step 608. Wireless transmitter 430, following standard procedures of WAP or another communication protocol, establishes communication link 112 with central server 102, step 610, and transfers the communication file to central server 102, step 612. After the file is transferred, wireless transmitter 430 terminates communication link 112, step 614. As one of ordinary skill in the art would now recognize, it would be possible to program central server 102 to transmit a successful or unsuccessful file transfer signal back to remote computing device 106. Remote computing device 106 would then terminate communication link 112 on a successful signal and retransfer the file on an unsuccessful signal.

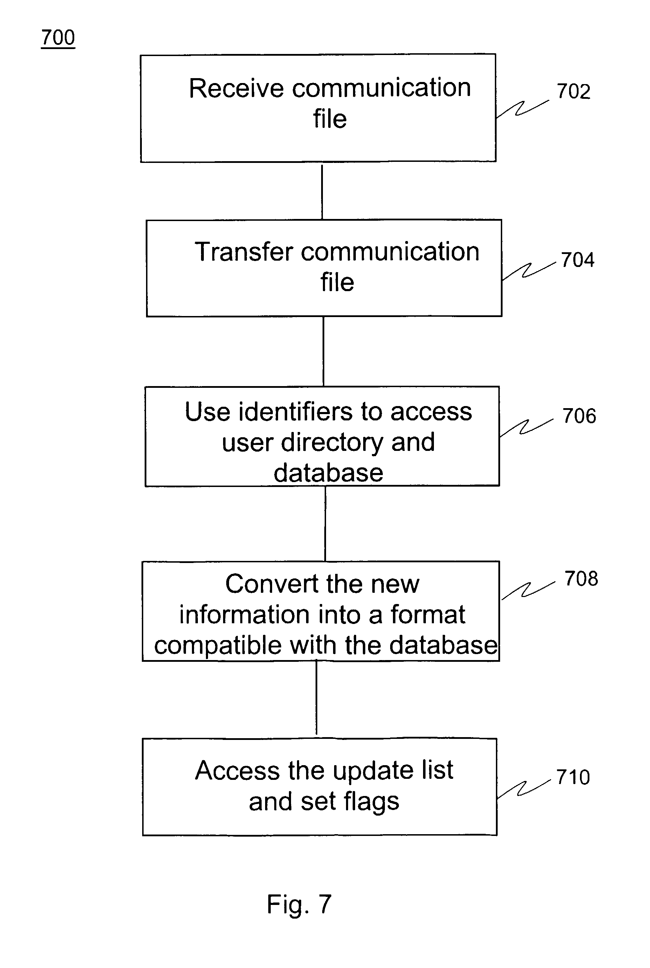

Fig. 7 shows a flow chart 700 describing operation of central server 102 to receive the communication file from remote computing device 106. First, wireless receiver 240 receives the communication file transmitted over communication link 112, step 702. Wireless receiver 240 transfers the communication file to CPU 210, step 704. CPU 210 uses the device identifier and database identifier to access the proper user directory and database file, step 706. CPU 210 then coverts the new information in the communication file into a format compatible with the identified database and updates the database file and a new information file (not shown), which maintains the new information until all device have been reconciled, the database identifier and the unique device identifier, step 708. Next, CPU 210 accesses update list 350, associated with the updated database 340 and gets update flags, step 710. In particular, update flag associated with remote computing device 106, which is the device that transmitted the information, is set to indicate that it is currently updated with the database in memory 220 of central server 102. The update flags associated with other remote computing devices, in this case devices 104, 108, and 110, are set to indicate that databases stored in the memory of those remote devices need updating.

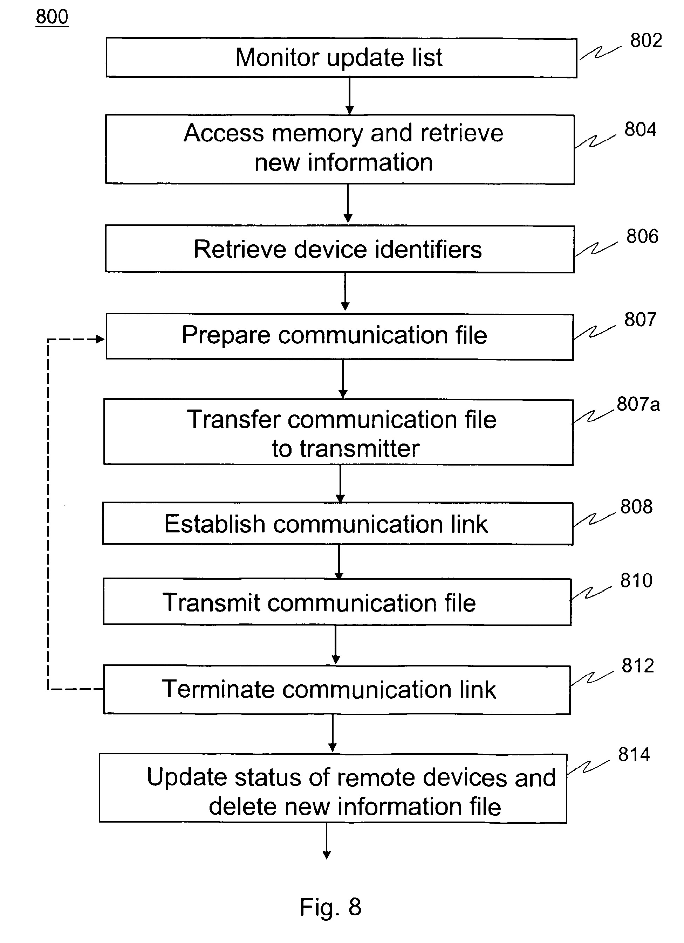

Fig. 8 shows a flow chart 800 describing operation of central server 102 to update the databases stored in remote computing device 104. The procedures central server 102 uses to update remote computing devices 106, 108, and 110 are substantially identical to the procedures described in flow chart 800. First, CPU 210 monitors update list 350 for the need updating indication, step 802. CPU 210 then access memory 220 to retrieve the new information file stored in memory 220, step 804, and the device identifiers in device list 330 of those devices in need of updating, step 806. In this example, remote computing devices 104, 108, and 110 would need updating. CPU 210 then prepares a communication file, step 807, for transfer to remote computing device 104. The communication file includes the new information and the database identifier. The communication file is then transferred to wireless transmitter 230, step 807a. The unique device identifier indicating the user and the device is used by wireless transmitter 230 to establish a communication link 112 with remote computing device 104, step 808. Wireless transmitter 230 then transmits the communication file to remote computing device 104, step 810. CPU 210 then updates the flag in update list 350 for device 104 to indicate that the file has been updated. After transmitting the communication file, wireless transmitter 230 would terminate communication link 112, step 812. If additional remote computing devices are in need of the new information, control would return back to step 807 to update the next remote computing device. Finally, CPU 210 checks update list 350 and if all devices are indicated as updated, CPU 210 deletes the new information file, step 814. As one of ordinary skill in the art would now recognize, it would be possible to program remote computing device 104 to transmit a successful or unsuccessful file transfer signal back to central server 102. Central server 102 would then terminate communication link 112 on a successful signal and retransfer the file on an unsuccessful signal.

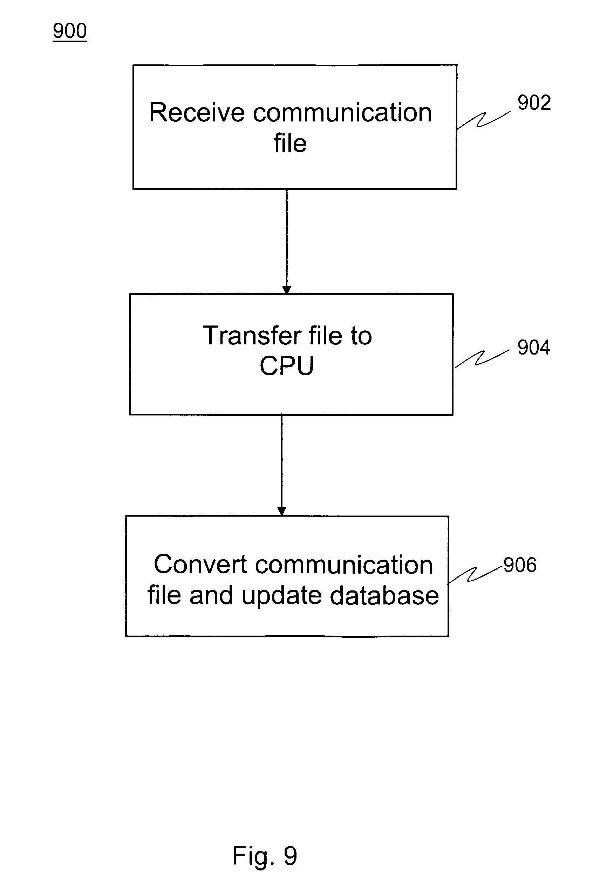

Fig. 9 is a flow chart 900 describing operation of remote computing device 104 upon reception of the communication file from central server 102. First, a wireless receiver in remote computing device 104 receives the communication file, step 902. Next, the wireless receiver transfers the file to a CPU in remote computing device 104, step 904. The CPU converts the communication file into a format compatible with the identified database and updates the indicated database file, step 906.

One advantage of using central server 102 is that when one or more remote computing devices are not powered, central server 102 can save new information until that device is powered. Central server 102 would store the information until the remote computing device is powered and then transfer the new information to the remote computing device. Also, while central server 102 is described using update list 350, it would be possible to use backup directories as described in U.S. Patent 5,832,489.

It will be apparent to those skilled in the art that various modifications and variations can be made in the method of the present invention and in construction of the preferred embodiments without departing from the scope or spirit of the invention. Other embodiments of the invention will be apparent to those skilled in the art from consideration of the specification and practice of the invention disclosed herein. It is intended that the specification and examples considered as exemplary only, with the scope of protection being indicated by the following claims.

## Claims

1. A method for reconciling data in databases using a central server, the method comprising the steps of:
receiving new information at a central server;
updating a database stored at the central server;
determining whether at least one remote computing device requires the received new information; and
transmitting the new information to the at least one remote computing device.

2. The method according to claim 1, wherein the receiving new information step includes establishing a first communication link between a first remote computing device and the central server.

3. The method according to claim 1, further comprising the steps of:
inputting new information to a database stored at the first remote computing device;
converting the new information into a communication file capable of transmission over a communication link;
establishing a first communication link between the first remote computing device and the central server;
transmitting the new information from the first remote computing device to the central server; and
terminating the first communication link.

4. The method according to claim 3, further comprising the steps of:
converting the communication file into a format compatible with the database stored in the central server; and
updating a update list to indicate the first remote computing device is updated and to indicate at least another remote computing device needs to be updated.

5. The method according to claim 4, further comprising the steps of:
monitoring the update list;
determining the at least another remote computing device that needs to receiving the new information based on the monitored update list;
establishing a second communication link between the central server and the at least another remote computing device determined to need the new information;
transmitting the communication file from the central server to the at least another remote computing device; and
terminating the second communication link.

6. The method according to claim 5, wherein the terminating steps further include the step of sending a success signal indicating a successful file transfer.

7. The method according to claim 6, wherein the sending a success signal step further includes re-transmitting the communication file until the success signal is received.

8. The method according to claim 5, further comprising the steps of:
checking whether the at least another remote computing device is powered; and
maintaining the communication file until the at least another remote computing device is powered.

9. A central server capable of reconciling databases between at least two remote computing devices, the central server comprising:
a memory for storing a central database, a device identifier list, and an update list;
a receiver adapted to receive a communication file containing new information from one of the at least two remote computing device;
a central processing unit capable of converting the communication file into a format compatible with the central database, for updating the central database with the converted communication file information, and for updating the update list; and
a transmitter adapted to establish a communication link with the at least two remote computing devices for transmitting the communication file.

10. The central server of claim 9, wherein the central server uses the wireless receiver and wireless transmitter.

11. The central server of claim 10 wherein the central server comprises an Internet server accessible through wireless gateway.

12. The central server of claim 11 wherein wireless receiver and wireless transmitter use the wireless application protocol (WAP).

13. A system for reconciling databases on at least two remote computing devices, comprising:
at least two remote computing devices, each remote computing device including a transmitter, a receiver, a remote memory containing a database to be reconciled, and a remote processing unit; and
a central server including a transmitter, a receiver, a central memory, and a central processing unit,
wherein new information input into the remote memory of one of the at least two remote computing devices is transmitted to the receiver of the central server and the transmitter of the central server transmits the new information to the others of the at least two remote computing devices such that the databases are reconciled.

14. The system of claim 13, wherein the system uses wireless receivers and wireless transmitters.

15. The system of claim 14 wherein the central server comprises an Internet server accessible through wireless gateway.

16. The system of claim 15 wherein wireless receivers and wireless transmitters use the wireless application protocol (WAP).

17. The system of claim 13, wherein the central memory includes a update list to indicate the status of the at least two remote computing devices.

18. The system of claim 13, wherein the central memory includes a device list containing identifiers of the at least two remote computing devices.

19. The system of claim 13, wherein the central memory includes a user list containing identifiers of the users of the system.

20. A computer program product comprising:
a computer usable medium having computer readable code embodied therein for reconciling databases, the computer usable medium comprising:
a receiving module configured to receive new information at a central server;
an updating module configured to updating a database stored at the central server;
a determining module configured to determine whether at least one remote computing device requires the received new information; and
a transmitting module configured to transmit the new information to the at least one remote computing device.

21. The computer program product according to claim 20, wherein the receiving module is further configured to establish a first communication link between a first remote computing device and the central server.

22. The computer program product according to claim 20, wherein the computer usable medium further comprises:
an inputting module configured to input new information to a database stored at the first remote computing device;
a converting module configured to convert the new information into a communication file capable of transmission over a communication link;
a communication module configured to establish a first communication link between the first remote computing device and the central server;
the transmitting module is further configured to transmit the new information from the first remote computing device to the central server; and
the communication module is further configured to terminate the first communication link.

23. The computer program product according to claim 22, wherein the computer usable medium further comprises:
the converting module is further configured to convert the communication file into a format compatible with the database stored in the central server; and
an updating module configured to update a update list to indicate the first remote computing device is updated and to indicate at least another remote computing device needs to be updated.

24. The computer program product according to claim 23, wherein the computer usable medium further comprises:
a monitoring module configured to monitor the update list;
a determining module to determine the at least another remote computing device that needs to receiving the new information based on the monitored update list;
the communication module is further configured to establish a second communication link between the central server and the at least another remote computing device determined to need the new information;
the transmitting module is further configured to transmit the communication file from the central server to the at least another remote computing device; and
the communication module is further configured to terminate the second communication link.

25. The computer program product according to claim 24, wherein the communication module is further configure to send a success signal indicating a successful file transfer.

26. The computer program product according to claim 25, wherein the communication module is further configure to re-transmit the communication file until the success signal is received.

27. The computer program product according to claim 24, wherein the computer usable medium further comprises:
a checking module configured to check whether the at least another remote computing device is powered; and
a maintaining module configure to maintain the communication file until the at least another remote computing device is powered.
